(19) **Europäisches Patentamt**

**European Patent Office**

**Office européen des brevets**

(11) **EP 1 347 996 B1**

(12) **EUROPEAN PATENT SPECIFICATION**

(45) Date of publication and mention
of the grant of the patent:
**14.07.2004 Bulletin 2004/29**

(51) Int Cl.⁷: **C08F 220/18**, C03C 25/10,
D06M 15/21

(21) Application number: **01997512.7**

(22) Date of filing: **19.11.2001**

(86) International application number:
**PCT/EP2001/013531**

(87) International publication number:
**WO 2002/042344 (30.05.2002 Gazette 2002/22)**

(54) **FORMALDEHYDE-FREE CROSSLINKED CORE-SHELL LATEX FOR TEXTILE**

FORMALDEHYDFREIER VERNETZTER KERN-SCHALE-LATEX FÜR TEXTILIEN

LATEX AME/GAINE RETICULE EXEMPT DE FORMOL POUR LE TEXTILE

(84) Designated Contracting States:
**AT BE CH CY DE DK ES FI FR GB GR IE IT LI LU
MC NL PT SE TR**

(30) Priority: **21.11.2000 IT MI20002498**

(43) Date of publication of application:
**01.10.2003 Bulletin 2003/40**

(73) Proprietor: **Atofina**
**92800 Puteaux (FR)**

(72) Inventors:
• **SAIJA, Léo, Mario**
  **I-42011 Bagnolo in Piano (IT)**
• **LUGLI, Mario**
  **I-42042 Fabbrico (IT)**

(74) Representative: **Chaillot, Geneviève**
**Cabinet CHAILLOT,**
**16-20, avenue de L'Agent Sarre,**
**B.P. 74**
**92703 Colombes Cédex (FR)**

(56) References cited:
**DE-A- 4 419 518**

• **DATABASE CA [Online] CHEMICAL
ABSTRACTS SERVICE, COLUMBUS, OHIO, US;
NIPPON SHOKUBAI KAGAKU KOGYO CO.,
LTD., JAPAN: "Binder for glass fibers" retrieved
from STN Database accession no. 102:153723
XP002200831 & JP 59 203738 A (NIPPON
SHOKUBAI KAGAKU KOGYO CO., LTD., JAPAN)
17 November 1984 (1984-11-17)**
• **DATABASE WPI Section Ch, Week 199703
Derwent Publications Ltd., London, GB; Class
A14, AN 1997-029753 XP002200832 & JP 08
291469 A (KANEBO NSC KK), 5 November 1996
(1996-11-05)**

EP 1 347 996 B1

**Description**

The present invention relates to aqueous dispersions of polymers for treating glass fibres or textile fibres, optionally in the form of wovens or nonwovens.

In particular, the invention relates to aqueous dispersions of acrylic copolymers which, when applied to fibres, impart and maintain an optimum combination of mechanical properties such as tensile strength, elongation at break, hand (softness), elasticity, dry and wet abrasion resistance, and also high resistance to water and solvents (resistance to washing) and good adhesion to the substrate.

It is known that the use of water-based polymer dispersions in the textile field has widely replaced that of solvent-based products, due to their reduced environmental impact.

The polymer dispersion may act as binder and/or adhesive agent, for instance in applications such as flocking, coating, laminating, and nonwovens impregnation ; alternatively, it may act as a binder/dispersing agent, for instance in textile pigment printing, or, finally, it may be used as a dressing or size.

For most of the above mentioned applications, it is necessary for the polymer phase to be able to interact with the fibres, thus giving the manufactured product sufficient mechanical strength and chemical resistance, in particular during the dry-cleaning and washing operations and/or in spot-removing operations. The expression "mechanical strength" means the combination of the mechanical properties mentioned above. The expression "chemical resistance" means the resistance to solvents, water, alcoholic solutions, etc.

The aqueous polymer dispersions most commonly used in this field are those functionalized with crosslinking monomers capable of giving, upon drying at high temperature, covalent bonds between the polymeric chains and between the polymer and the fibre. In this way, it is possible to form crosslinked structures that are resistant to the action of external agents.

The functional monomers that are most effective for this application are methylol derivatives of (meth)acrylamide, for example N-methylol(meth)acrylamide (N(M)MA). These monomers are characterized by an ethylenic double bond which allows them to undergo free-radical polymerization, and by an $-NHCH_2OH$ group which allows crosslinking by means of a condensation reaction with other functional groups at high temperature, in general above 100°C. In this way, covalent bonds are formed between chains or between a polymer chain and the support. The main drawback of this crosslinking system is that, during the condensation reaction, which takes place as stated at high temperature, formaldehyde is released. Formaldehyde is a colourless gas with an irritant odour, which is water-soluble and which, since 1987, has been classified by the World Health Organization as a potential human carcinogenic agent. For this reason, very low limits on the residual amounts of formaldehyde have been set. Thus, the use of polymer dispersions which produce formaldehyde has become problematic in the case of treating nonwoven materials used in the medical field, in which a maximum HCHO content of less than 30 ppm is required, in paediatrics (HCHO content < 20 ppm) or in the clothing field (HCHO content < 100 ppm).

Specifically, with acrylic dispersions functionalized with NMA it is difficult to achieve residual HCHO values that are within the set limits, without prejudicing the mechanical strength and chemical resistance of the treated material.

Consequently, the production process would require additional treatments to reduce the residual amount of HCHO such that it is below the limit values mentioned above, with a penalizing effect on the costs. However, these treatments are rarely effective. To this end, it should be added that the working environments in which these treatments are carried out must be provided with adequate safety standards.

For these reasons, it is necessary in this sector to use other products, such that during the production and use cycle, no formaldehyde or other toxic substances are produced.

Patent US 5 362 798 describes aqueous dispersions based on SBR, styrene-butadiene elastomeric copolymer, which also contain in the chain functional monomers, such as, for example, acetoacetoxyethyl methacrylate, to allow self-crosslinking. Other patents such as, for example, US 5 198 492 describe an SBR resin functionalized with an acrylic monomer containing -CONH- groups, for example methacrylamide glycolate methyl ether. These dispersions produce low levels of HCHO. However, aqueous dispersions based on SBR have the drawback of being relatively unstable on ageing and of causing yellowing of the treated textile fibres.

It is also known practice to use aqueous dispersions that are self-crosslinking at low temperature. For example, patent US 3 706 697 describes acrylic emulsions obtained by polymerization of an acrylic monomer, an acryloyloxyalkylsilane and another copolymerizable monomer chosen from vinyl acetate, styrene, acrylonitrile, acrylamide, etc. The said patent states that the silane monomer may be added even after an amount between 15% and 80% of the acrylic monomer and of the other copolymerizable monomer has been polymerized. Optionally, during the polymerization, polyfunctional monomers may be added, such as, for example, trimethylolpropane triacrylate. The dispersions obtained are used to increase the wet strength of paper. In the examples of the said patent, it is shown that the use of acryloyloxyalkylsilane, in particular γ-methacryloyloxypropyltrimethoxysilane, improves the wet mechanical properties (wet tensile strength) both in water and in solvent. The description also states that vinylsilanes cannot be used on account of their low polymerization reactivity towards acrylic monomers. Specifically, according to the prior art, this type of silane has a rate of hydrolysis which is greater than the rate of polymerization, with a consequent risk of premature cross-linking in the wet state and formation of coagula. Thus, the said patent teaches that to obtain self-crosslinking polymers, the acryloyloxyalkylsilanes described above are required. The application examples relate to paper and no application relating to glass fibres or textile fibres is given. In addition, in the polymerization process used, a buffer agent (sodium phosphate) is mandatorily used to keep the polymerization pH at about 7.

US patent 4 959 249 describes self-crosslinking vinyl dispersions that are free of or produce only low levels of formaldehyde, which are applied to textile fibres, giving good mechanical properties that are maintained even after treatment with water and solvents. The essential components of the dispersions are vinyl esters and vinyltrialkoxysilanes or alkylvinyldialkoxysilanes, plus other optional components. Dispersions of acrylic monomers are not described. In the said patent, it is also indicated that acrylic dispersions of the prior art that are free of formaldehyde have insufficient mechanical properties or poor resistance to solvents or water. Also, in certain circumstances, the vinyl dispersions may, after application, give rise to yellowing of the finished manufactured products.

It was thus found to be necessary to have available aqueous dispersions of self-crosslinking polymers for treating glass fibres and textile fibres, which, after application, will not yellow and will not produce residual amounts of formaldehyde, while maintaining an optimum combination of mechanical properties such as tensile strength, elongation at break, hand (softness), elasticity, dry and wet abrasion resistance, and in particular high resistance to water and solvents (washing or dry-cleaning) that are comparable with those imparted by the use of systems based on N-methylol (meth)acrylamide and derivatives thereof.

The Applicant has found, surprisingly and unexpectedly, aqueous polymer dispersions as described above that are capable of giving the combination of properties mentioned above.

Thus, one subject of the present invention is aqueous dispersions of acrylic polymers which do not release formaldehyde during the application stage, comprising the following components:

a) from 25% to 95% by weight of one or more polymerizable acrylic monomers whose corresponding homopolymer has a glass transition temperature (Tg) less than 0°C and preferably less than -20°C;
b) from 4% to 70% by weight of one or more polymerizable acrylic monomers whose corresponding homopolymer has a Tg greater than 0°C and preferably greater than 40°C;
c) from 0.05% to 4% by weight and preferably from 0.05% to 2% by weight of one or more monomers containing at least two ethylenic unsaturations ;
d) from 0.2% to 5% and preferably 0.5-3% by weight of a vinylsilane having the formula :

$$CH_2=CR\text{-}Si(OR')_nR_m$$

in which:

n is an integer equal to 2 or 3 ;
m is an integer equal to 0 or 1,
R = H or $CH_3$,
R' = $C_1$-$C_{10}$ and preferably $C_3$-$C_5$ alkyl group, which is linear or branched if possible ;

e) from 0.2% to 10% by weight of an ethylenically unsaturated monomer containing one or more acid groups, preferably carboxylic acid groups, or corresponding salts and/or corresponding anhydrides ;

the sum of the components a) + b) + c) + d) + e) being 100%, the said aqueous dispersions being obtainable by means of a free-radical polymerization process, the polymerization being carried out in the presence of initiator systems or redox pairs in which the reducing agent does not release formaldehyde, the polymer dispersion at the end of the polymerization being subjected to a treatment to reduce the free monomer content with redox pairs in which the reducing agent does not release formaldehyde.

The initiator systems used in the polymerization phase (pre-emulsion feed) are those for the free-radical polymerization of monomers in aqueous emulsion. Preferred systems which may be mentioned are organic hydroperoxides in aqueous solution or salts thereof and peroxydisulphuric acid salts. Mention may be made of tert-butyl hydroperoxide and ammonium persulphate.

The reducing agents of the redox pairs which do not release formaldehyde are, for example, ammonium or alkali metal hydrogen sulphites, for example sodium metabisulphite, ascorbic acid, a monofunctional aldehyde with a number of carbon atoms greater than or equal to 4 and containing at least one salifiable hydrogen, which is organic or inorganic, or salts thereof, the aldehyde reducing agent or salts thereof being water-soluble to at least 5% by weight and preferably to at least 10% by weight. Another reducing agent which may be used is a sulphinic acid of formula

MO-S(O)-C($R^1R^2R^3$), in which M is hydrogen, ammonium, a monovalent metal ion or a divalent ion chosen from groups Ia, IIa, IIb, IVa and VIIIb; $R^1$ is OH or $NR^4R^5$ in which $R^4$ and $R^5$, independently of each other, are H or $C_1$-$C_6$ alkyl; $R^2$ is H, alkyl, alkenyl, cycloalkyl or aryl, in which the aromatic ring may optionally contain substituents in position 1, 2 or 3, which are chosen, independently of each other, from $C_1$-$C_6$ alkyl, OH, $C_1$-$C_6$ alkoxy, halogen, $CF_3$; $R^3$ is H, COOM, $SO_3M$, $COR^4$, $CONR^4R^5$ or $COOR^4$, in which M, $R^4$ and $R^5$ have the meanings given above or, when $R^2$ is aryl, it is as defined above. These reducing agents and the method for preparing them are described in patent application DE 197 43 759.

Reducing agents which must not be used are sodium formaldehyde sulphoxylate or similar products since they release formaldehyde.

The oxidizing agents of the redox pair which may be mentioned are the initiators mentioned above or hydrogen peroxide and peroxydisulphuric acid salts.

Preferably, in the dispersions of the invention, the components d) and optionally e) are added after components a) + b) + c) have been polymerized, preferably to about one half by weight of the total amount of a) + b) + c). By working in this way, the components d) and optionally e) are substantially located in the outer layer of the particles. It has been found that phenomena of interaction or crosslinking with the other polymer particles and with the fibres, leading to the optimum combination of properties as described above, may be promoted in this way. Depending on the particle size, the addition of the monomers d) and e) may also take place after two-thirds by weight of the total amount of a) + b) + c) have been polymerized. A person skilled in the art is capable of determining the right time for addition of the monomers d) and e) such that these comonomers are preferentially located on the outside of the polymer particles. It has been found by the Applicant that an optimum combination of properties as mentioned above is obtained when the component e) is polymerized together with a) + b) + c), preferably for at least one-half and more preferably for at least two-thirds by weight of the total amount of a) + b) + c) + e); alternatively, the component e) is added together with the component d), after one-half of a) + b) + c) have been polymerized, giving results that are substantially identical to those of the above procedure.

Components which may be used as component a) are monomers of (meth)acrylic type containing from 4 to 20 carbon atoms and preferably from 5 to 15 carbon atoms, and mention may be made, for example, of acrylic or methacrylic esters, for example ethyl acrylate, butyl acrylate and 2-ethylhexyl (meth)acrylate.

Components which may be used as component b) are monomers of (meth)acrylic type containing from 3 to 20 carbon atoms and preferably from 3 to 10 carbon atoms. Mention may be made of acrylic or methacrylic esters, preferably methyl methacrylate, ethyl methacrylate; acrylamide and acrylonitrile. Styrene or derivatives thereof may optionally be used as a mixture with the component b), in an amount generally of 5-70% by weight relative to the total weight of b).

Components which may be used as component c) are monomers containing at least two ethylenic unsaturations of acrylic, vinylic or allylic type, such as, for example, allyl methacrylate, ethylene glycol di(meth)acrylate (EGD (M)A); monomers containing more than two ethylenic unsaturations as defined above are those that are preferred as component c), for example trimethylolpropane tri(meth)acrylate (TMPTA).

Components d) which may be mentioned are vinyltriisopropoxysilane and vinyltrimethoxysilane.

Components e) which may be mentioned are (meth)acrylic acid, itaconic acid, acrylamidodimethylpropanesulphonic acid, styrenesulphonic acid, maleic acid and fumaric acid, or the anhydrides or salts of the said acids. An ethylenically unsaturated comonomer with more than one acid group of carboxylic type is preferably used.

The dispersions that are preferred in the invention contain from 60% to 90% by weight of component a), from 5% to 30% by weight of component b), from 0.5% to 1.5% by weight of component c), from 0.5% to 4% by weight of component d) and from 0.5% to 2.5% by weight of component e), the sum of the components being 100%.

The dispersions of the present invention are obtained by means of a free-radical polymerization process of semi-continuous type, in aqueous emulsion, in which a portion of a pre-emulsion of monomers, prepared beforehand, is introduced into the reactor to initiate the polymerization, while the remaining portion of the pre-emulsion is fed in continuously or batchwise, immediately after the exothermic peak. In general, the exothermic peak takes place about 5-20 minutes after introducing the initiator systems.

One process for obtaining the dispersions of the invention comprises the preparation of a pre-emulsion consisting of components a) + b) + c) and optionally e), and 2-10% by weight of this pre-emulsion is fed into the polymerization reactor to initiate the reaction; at the exothermic peak, the remaining portion of pre-emulsion of the components a) + b) + c) and optionally e) is fed in at a constant feed rate over a time of 1 to 5 hours, up to about one-half and preferably two-thirds by weight, of the total amount of monomers; the further residual portion of pre-emulsion a) + b) + c) and optionally e) is then fed in, enriched with the component d), and optionally e) when this component has not been added together with a) + b) + c), in the concentrations defined above, over a period from about 30 minutes to 2.5 hours. The amount of e), when it is used together with a) + b) + c), ranges from 0% to 100% by weight relative to the total amount of e). The feed times are generally such that the temperature in the polymerization reactor is kept constant.

Another process for obtaining the dispersions of the invention consists, after having initiated the reaction with a pre-emulsion consisting of the components a) + b) + c) and optionally e), in sequentially polymerizing first a pre-emulsion a) + b) + c) and optionally e), and then a pre-emulsion a) + b) + d) + e), the pre-emulsions preferably having the same ratio of the components a)/b); the first pre-emulsion a) + b) + c) and optionally e) being in an amount by weight equal to one-half and preferably two-thirds of the total amount of monomers, and the second pre-emulsion a) + b) + d) + e) being in an amount by weight equal to about one-half and preferably one-third of the total amount of monomers.

The amount of e) in the first pre-emulsion ranges from 0% to 75% by weight of the total amount of e) and in the second pre-emulsion it ranges from 25% to 100% by weight of the total amount of e).

The pre-emulsions mentioned above are prepared by known techniques using conventional or polymerizable surfactants. For example, mention may be made of anionic surfactants such as alkanesulphonates; nonionic surfactants such as ethoxylated alkylphenols, for example nonylphenol ethoxylated with 20 mol of ethylene oxide, or ethoxylated fatty alcohols, for example a $C_{12}$-$C_{14}$ fatty alcohol ethoxylated with 30 mol of ethylene oxide.

Preferably, the initiator systems and the surfactants, when they are used in the form of salts, are used in the form of ammonium salts.

The polymer dispersion of the invention may be post-stabilized, if necessary, with the surfactants mentioned for the preparation of the pre-emulsions, preferably nonionic surfactants.

The polymerization temperatures used are preferably in the range from 30°C to 80°C.

At the end of the polymerization, the polymer dispersions are subjected to a treatment to reduce the residual monomer content with redox pairs. Redox pairs which may be used are those mentioned above.

The aqueous dispersions of the present invention in the form of latices are characterized in physicochemical terms (see the examples); they are then dried to obtain polymer films for physicomechanical characterization (see the examples).

As stated, the dispersions of the invention may be used in unmodified form or for the preparation of formulations for use in treating textile fibres or glass fibres.

It has been found by the Applicant that component d) of the invention is used in polymerization without the need to use buffer agents such as, for example, alkali metal or alkaline-earth metal phosphates or carbonates, producing dispersion characterised by very low grit level.

This represents an advantage since it has been found that the polymer film of the invention shows better water-resistance when applied to textiles.

The examples which follow are given for illustrative purposes, but are not intended to limit the scope of the invention.

## EXAMPLES

Characterization

The tests carried out on the polymer films are :

1) Determination of the maximum tensile strength and the elongation at break according to DIN standard 53455, using a type 4 test sample and a traction speed of 300 mm/min, both in the dry state and after swelling the test samples in water for 24 hours and in ethanol for 8 hours.
2) Determination of the elasticity under a static load, according to ASTM standard D412.
Type 5 test samples, according to DIN standard 53455, stretched to 300% ($l_a$) relative to their initial length ($l_i$), were maintained under tension for a period of 8 hours. They were then positioned vertically and left at rest for a period of 16 hours so as to regain their initial dimensions. At the end, the final length ($l_f$) of the test sample was measured. The elasticity E was calculated in the following way:

$$E = (l_a\text{-}l_f)/(l_a\text{-}l_i)\times100$$

3) Determination of the Shore A hardness according to ASTM standard D2240-81.

Tests carried out on nonwoven samples impregnated with the polymer dispersions

*Preparation of the test samples*

Samples of nonwovens composed of a mixture of cellulose and polyester fibres are impregnated with the aqueous dispersions of the invention to a weight per unit area of about 50 $g/m^2$. After drying the sample (1.5 minutes at 105°C) and crosslinking for 5 minutes at 130°C, test samples of 5 x 15 cm in size are obtained.

The test to which samples are subjected is that of traction at a speed of about 2.5 cm/min, by means of which the breaking force and the elongation at break are determined.

The mechanical characteristics are determined on test samples immediately after impregnation, after three washing cycles in water at 60°C, after dry-cleaning, or in wet form after swelling in water for 24 hours and in isopropanol for 8 hours. Table 2 gives the said characteristics.

**EXAMPLE 1 (comparative)**

Production of an aqueous dispersion of a polymer not containing components c), d) or e) and containing NMA

1 818 g of deionized water and 16.8 g of nonylphenol ethoxylated with 40 mol of ethylene oxide are added to a glass reactor fitted with a condenser, a stirrer, a temperature control system and inlets for nitrogen, the initiator solutions and the pre-emulsion feed, respectively. An emulsion composed of 1 532 g of deionized water, 161 g of nonylphenol ethoxylated with 40 mol of ethylene oxide, 8.8 g of sodium lauryl sulphate, 2 888 g of n-butyl acrylate (component a), 464 g of acrylonitrile (component b), 38 g of acrylamide (component b) and 54 g of N-methylolacrylamide is prepared in another container fitted with a stirrer (pre-emulsifier). When the content of the reactor has reached a temperature of 50°C, 205 g of the pre-emulsion of monomers prepared above and, successively, 0.25 g of sodium persulphate dissolved in 5 g of deionized water, 16 mg of ferrous sulphate dissolved in 5 g of deionized water and 0.12 g of sodium metabisulphite dissolved in 5 g of deionized water are transferred therein.

Once initiation has been achieved, the temperature inside the reactor rises by about 10°C (exothermic peak). About one minute after reaching the maximum temperature, the remaining portion of the monomer emulsion and 82 g of sodium metabisulphite at 10% in deionized water and 207 g of sodium persulphate at 5% in deionized water are added to the reactor at a constant feed rate, over a period of 3 hours, taking care to keep the content of the reactor at a temperature of 60°C throughout the introduction. At the end of the introduction, the reaction mass is maintained at 60°C for a further 30 minutes and 9.5 g of tert-butyl hydroperoxide dissolved in 63.7 g of deionized water and 7.3 g of sodium formaldehyde sulphoxylate dissolved in 174 g of water are added at a constant feed rate, over a period of 75 minutes. Half an hour after the end of the above addition, the product obtained is cooled to 35°C and neutralized to a pH between 5 and 6 with 28 Bé aqueous ammonia and 220 g of deionized water, with continued cooling down to room temperature. At the end, the mixture is filtered through a 36 mesh screen.

The dispersion obtained has a pH of 5.2, a viscosity (Brookfield RVT at 100 rpm and at 23°C) of 100 mPa.s, a dry residue of 46.5% by weight (1 h at 105°C) and a coagulum content on a 275 mesh screen less than 200 ppm.

**EXAMPLE 2**

1 818 g of deionized water and 16.8 g of nonylphenol ethoxylated with 40 mol of ethylene oxide are added to a glass reactor fitted with a condenser, a stirrer, a temperature control system and inlets for nitrogen, the initiator solutions and the pre-emulsion feed, respectively. An emulsion composed of 1 532 g of deionized water, 161 g of nonylphenol ethoxylated with 40 mol of ethylene oxide, 8.8 g of sodium lauryl sulphate, 2 888 g of n-butyl acrylate (component a), 464 g of acrylonitrile (component b), 38 g of acrylamide (component b), 16.9 g of acrylic acid (component e) and 19.5 g of trimethylolpropane triacrylate (component c) is prepared in another container fitted with a stirrer (pre-emulsifier).

When the content of the reactor has reached a temperature of 50°C, 205 g of the pre-emulsion of monomers prepared above and, successively, 0.25 g of ammonium persulphate dissolved in 5 g of deionized water, 16 mg of ferrous sulphate dissolved in 5 g of deionized water and 0.12 g of sodium metabisulphite dissolved in 5 g of deionized water are transferred therein.

Once initiation has been achieved, the temperature inside the reactor rises by about 10°C (exothermic peak). About one minute after reaching the maximum temperature, the remaining portion of the monomer emulsion and 82 g of sodium metabisulphite at 10% in deionized water and 207 g of ammonium persulphate at 5% in deionized water are added to the reactor at a constant feed rate, over a period of 3 hours, taking care to keep the content of the reactor at a temperature of 60°C throughout the introduction. 112 minutes after the start of the introduction, 36 g of vinyltriisopropoxysilane (component d) and 40 g of water are added to the remaining portion of pre-emulsion.

At the end of the introduction, the reaction mass is maintained at 60°C for a further 30 minutes and 9.5 g of tert-butyl hydroperoxide dissolved in 63.7 g of deionized water and 17.5 g of Bruggolite FF6 (sulphinic acid derivative), sold by Brüggemann, dissolved in 312 g of deionized water are added at a constant feed rate, over a period of 75 minutes.

Half an hour after the end of the above addition, the product obtained is cooled to 35°C and neutralized to a pH between 5 and 6 with 28 Bé aqueous ammonia and 220 g of deionized water, with continued cooling down to room temperature. At the end, the mixture is filtered through a 36 mesh screen.

The dispersion obtained has a pH of 5.5, a viscosity (Brookfield RVT at 100 rpm and at 23°C) of 110 mPa.s, a dry residue of 46.0% by weight (1 h at 105°C) and a coagulum content on a 275 mesh screen less than 200 ppm.

**EXAMPLE 3 (comparative)**

Production of an aqueous dispersion of a polymer in which the vinylsilane component d) is replaced with an acrylsilane

The polymerization of Example 2 is repeated, replacing the vinyltriisopropoxysilane with 38.5 g of γ-methacryloyloxypropyltrimethoxysilane.

The dispersion obtained has a pH of 5.5, a viscosity (Brookfield RVT at 100 rpm and at 23°C) of 112 mPa.s, a dry residue of 46.1% (1 h at 105°C) and a coagulum content on a 275 mesh screen of 250 ppm.

**EXAMPLE 4**

The process is performed as in Example 2, replacing the vinyltriisopropoxysilane with 34.8 g of vinyltrimethoxysilane.

The dispersion obtained has a pH of 5.5, a viscosity (Brookfield RVT at 100 rpm and at 23°C) of 115 mPa.s, a dry residue of 46.0% by weight (1 h at 105°C) and a coagulum content on a 275 mesh screen lower than 200 ppm.

**EXAMPLE 5 (comparative)**

The process is performed as in Example 2, without adding the acrylic acid component e) to the pre-emulsion.

The dispersion obtained has a pH of 5.6, a viscosity (Brookfield RVT at 100 rpm and 23°C) of 130 mPa.s, a dry residue of 45.8% by weight (1 h at 105°C) and a coagulum content on a 275 mesh screen lower than 200 ppm.

**EXAMPLE 6**

1 818 g of deionized water and 16.8 g of nonylphenol ethoxylated with 40 mol of ethylene oxide are added to a glass reactor fitted with a condenser, a stirrer, a temperature control system and inlets for nitrogen, the initiator solutions and the pre-emulsion feed, respectively. An emulsion composed of 1 532 g of deionized water, 161 g of nonylphenol ethoxylated with 40 mol of ethylene oxide, 8.8 g of sodium lauryl sulphate, 2 888 g of n-butyl acrylate. (component a), 464 g of acrylonitrile (component b), 38 g of acrylamide (component b), 18 g of maleic anhydride (component e) and 19.5 g of trimethylolpropane triacrylate (component c) is prepared in another container fitted with a stirrer (pre-emulsifier).

When the content of the reactor has reached a temperature of 50°C, 205 g of the pre-emulsion of monomers prepared above and, successively, 0.25 g of ammonium persulphate dissolved in 5 g of deionized water, 16 mg of ferrous sulphate dissolved in 5 g of deionized water and 0.12 g of sodium metabisulphite dissolved in 5 g of deionized water are transferred therein.

Once initiation has been achieved, the temperature inside the reactor rises by about 10°C (exothermic peak). About one minute after reaching the maximum temperature, the remaining portion of the monomer emulsion and 82 g of sodium metabisulphite at 10% in deionized water and 207 g of ammonium persulphate at 5% in deionized water are added to the reactor at a constant feed rate, over a period of 3 hours, taking care to keep the content of the reactor at a temperature of 60°C throughout the introduction. 112 minutes after the start of the introduction, 36 g of vinyltriisopropoxysilane (component d), 18 g of maleic anhydride (component e) and 40 g of water are added to the remaining portion of pre-emulsion.

At the end of the introduction, the reaction mass is maintained at 60°C for a further 30 minutes and 9.5 g of tert-butyl hydroperoxide dissolved in 63.7 g of deionized water and 17.5 g of Bruggolite FF6 (sulphinic acid derivative), sold by Brüggemann, dissolved in 312 g of deionized water are added at a constant feed rate, over a period of 75 minutes.

Half an hour after the end of the above addition, the product obtained is cooled to 35°C and neutralized to a pH between 5 and 6 with 28 Bé aqueous ammonia and 220 g of deionized water, with continued cooling down to room temperature. At the end, the mixture is filtered through a 36 mesh screen.

The dispersion obtained has a pH of 5.5, a viscosity (Brookfield RVT at 100 rpm and at 23°C) of 190 mPa.s, a dry residue of 46.2% by weight (1 h at 105°C) and a coagulum content on a 275 mesh screen lower than 220 ppm.

## EXAMPLE 7

Application of the aqueous dispersions obtained in the above examples to the process of impregnation of nonwovens

The mechanical characteristics determined as mentioned above are given in the tables.

Table 1 shows the mechanical characteristics of the polymer films pretreated for 5 minutes at 160°C, under dry conditions and after swelling in water for 24 hours and in ethanol for 8 hours.

Table 2 compares the mechanical characteristics defined above obtained before and after the heat treatment for 5 minutes at 160°C.

Table 3 shows the mechanical characteristics of the nonwovens under dry and wet conditions and after washing as indicated above.

From the results of Table 1, it may be seen that the acrylic dispersions of the invention show good mechanical properties like those functionalized with N-methylolacrylamide, but without release of formaldehyde.

The data in Table 2 demonstrate that the presence of the acid (component e)) makes it possible to obtain improved mechanical properties both before and after heat treatment for 5 minutes at 160°C.

The data in Table 3 show that the mechanical properties of the nonwovens impregnated with the dispersions of the invention are comparable with those functionalized with N-methylolacrylamide, but without release of formaldehyde.

## Table 1

| Ex. | Dry test sample | | Test sample after swelling in water for 24 hours | | Test sample after swelling in ethanol for 8 hours | | Dry test sample | |
|---|---|---|---|---|---|---|---|---|
| | Elongation at break (%) | Maximum load (N/mm$^2$) | Elongation at break (%) | Maximum load (N/mm$^2$) | Elongation at break (%) | Maximum load (N/mm$^2$) | Elasti-city (%) | Shore A hardness |
| 1 compar. | 1050 | 1.1 | 900 | 0.5 | 665 | 0.18 | 88 | 13 |
| 2 | 1200 | 1.9 | 1150 | 1.0 | 580 | 0.21 | 90 | 12 |
| 3 compar. | 380 | 2.0 | 245 | 0.9 | 42 | 0.05 | n.d. | 16 |
| 4 | 780 | 2.1 | 800 | 1.9 | 490 | 0.21 | 97 | 14 |
| 5 compar. | 1500 | 0.9 | 1450 | 0.9 | 646 | 0.17 | 75 | 15 |
| 6 | 900 | 1.6 | 790 | 1.2 | 550 | 0.26 | 95 | 14 |

n.d. = not determinable

EP 1 347 996 B1

Table 2

| Ex. | Dry test sample without heat treatment (160°C, 3 min.) | | Dry test sample after heat treatment | |
|---|---|---|---|---|
| | Elongation at break (%) | Maximum load (N/mm$^2$) | Elongation at break (%) | Maximum load (N/mm$^2$) |
| 2 | 1300 | 1.6 | 1200 | 1.9 |
| 5 compar. | 1600 | 0.8 | 1500 | 0.9 |
| 6 | 1050 | 1.4 | 900 | 1.6 |

EP 1 347 996 B1

### Table 3

| | Dry resistance | | | Wet resistance | |
|---|---|---|---|---|---|
| Ex. | Untreated test sample | Test sample after washing in water | Test sample after dry-cleaning | Test sample soaked in water | Test sample soaked in isopropyl alcohol |
| 1 compar. (A) | 40 | 41 | 26 | 17 | 13 |
| (B) | 1750 | 1730 | 1155 | 700 | 545 |
| 2 (A) | 40 | 38 | 25 | 15 | 15 |
| (B) | 1705 | 1665 | 1100 | 650 | 550 |

(A)  = breaking force F measured in N.

(B)  = elongation at break L expressed in metres, calculated by the following formula

$$L = F \, 10^6 / 1.g.9.81$$

where 1 = width of the test sample expressed in mm, g is the weight per unit area expressed in $g/m^2$ and 9.81 is the acceleration due to gravity.

**Claims**

1. Aqueous dispersions of acrylic polymers which do not release formaldehyde during the application of the dispersions, comprising the following components :

    (a) from 25% to 95% by weight of one or more polymerizable acrylic monomers whose corresponding homopolymer has a glass transition temperature (Tg) less than 0°C and preferably less than -20°C;
    (b) from 4% to 70% by weight of one or more polymerizable acrylic monomers whose corresponding homopolymer has a Tg greater than 0°C and preferably greater than 40°C;
    (c) from 0.05% to 4% by weight and preferably from 0.05% to 2% by weight of one or more monomers containing at least two ethylenic unsaturations;
    (d) from 0.2% to 5% and preferably 0.5-3% by weight of a vinylsilane having the formula :

$$CH_2=CR\text{-}Si(OR')_nR_m$$

    in which:

    - n is an integer equal to 2 or 3,
    - m is an integer equal to 0 or 1,
    - R = H or $CH_3$,
    - R' = $C_1$-$C_{10}$ and preferably $C_3$-$C_5$ alkyl group, which is linear or branched if possible;

    (e) from 0.2% to 10% by weight of an ethylenically unsaturated monomer containing one or more acid groups, preferably carboxylic acid groups, or corresponding salts and/or corresponding anhydrides;

    the sum of the components (a) + (b) + (c) + (d) + (e) being 100%, the said aqueous dispersions being obtainable by means of a free-radical polymerization process, the polymerization being carried out in the presence of initiator systems or redox pairs in which the reducing agent does not release formaldehyde, the polymer dispersion at the end of the polymerization being subjected to a treatment to reduce the free monomer content with redox pairs in which the reducing agent does not release formaldehyde, the components (d) and optionally (e) being added after the components (a) + (b) + (c) have been polymerized, the time for addition of the monomers (d) and (e) being such that these monomers are substantially located in the outer layer of the particles.

2. Dispersions according to Claim 1, in which the components (d) and optionally (e) are added after the components (a) + (b) + (c) have been polymerized to about one-half by weight of the total amount of the monomers, the amount of (e), when it is present together with (a) + (b) + (c) ranging from 0% to 100% by weight of (e).

3. Dispersions according to Claim 2, in which the components (d) and optionally (e) are added after the components (a) + (b) + (c) have been polymerized to about two thirds by weight relative to the total weight of the monomers.

4. Dispersions according to anyone of Claims 1 to 3, in which the component (e) is polymerized in the first pre-emulsion together with (a) + (b) + (c), preferably to at least one-half by weight relative to the total amount of the monomers, the amount of (e) being between 0% and 75% by weight relative to the total amount of (e), followed by the addition of a second pre-emulsion (a) + (b) + (d) + (e) in which the amount of (e) is between 25% and 100% by weight relative to the total amount of (e).

5. Dispersions according to anyone of Claims 1 to 4, in which the initiator systems used in the polymerization phase (pre-emulsion feed) are those for the free-radical polymerization of monomers in aqueous emulsion, preferably organic hydroperoxides in aqueous solution or salts thereof and peroxydisulphuric acid salts.

6. Dispersions according to anyone of Claims 1 to 5, in which the reducing agents of the redox pairs which do not release formaldehyde are ammonium or alkali metal sulphites and hydrogen sulphites; ascorbic acid; a monofunctional aldehyde with a number of carbon atoms greater than or equal to 4 and containing at least one salifiable hydrogen, which is organic or inorganic, or salts thereof, the aldehyde reducing agent or salts thereof being water-soluble to at least 5% by weight and preferably to at least 10% by weight; a sulphinic acid of formula :

$$MO\text{-}S(O)\text{-}C(R^1R^2R^3),$$

in which :

- M is hydrogen, ammonium, a monovalent metal ion or a divalent ion chosen from groups Ia, IIa, IIb, IVa and VIIIb;
- $R^1$ is OH or $NR^4R^5$ in which $R^4$ and $R^5$, independently of each other, are H or $C_1$-$C_6$ alkyl;
- $R^2$ is H, alkyl, alkenyl, cycloalkyl or aryl, in which the aromatic ring is optionally substituted in position 1, 2 or 3, which are chosen, independently of each other, from $C_1$-$C_6$ alkyl, OH, $C_1$-$C_6$ alkoxy, halogen, $CF_3$;
- $R^3$ is H, COOM, $SO_3M$, $COR^4$, $CONR^4R^5$ or $COOR^4$, in which M, $R^4$ and $R^5$ have the meanings given above or, when $R^2$ is aryl, it is as defined above.

7. Dispersions according anyone of Claims 1 to 6, in which monomers of (meth)acrylic type containing from 4 to 20 carbon atoms and preferably from 5 to 15 carbon atoms are used as component (a).

8. Dispersions according to anyone of Claims 1 to 7, in which monomers of (meth)acrylic type containing from 3 to 20 carbon atoms and preferably from 3 to 10 carbon atoms are used as component (b).

9. Dispersions according to Claim 8, in which the component (b) is mixed with styrene or derivatives thereof in an amount of from 5% to 70% by weight relative to the total weight of (b).

10. Dispersions according to anyone of Claims 1 to 9, in which monomers containing at least two ethylenic unsaturations of acrylic, vinylic or allylic type, preferably monomers containing more than two of the said unsaturations, are used as component (c).

11. Dispersions according to anyone of Claims 1 to 10, in which the component (d) is chosen from vinyltriisopropoxysilane and vinyltrimethoxysilane.

12. Dispersions according to anyone of Claims 1 to 11, in which the component (e) is chosen from (meth)acrylic acid, itaconic acid, acrylamidodimethylpropanesulphonic acid, styrenesulphonic acid, maleic acid and fumaric acid, or the anhydrides or salts of the said acids.

13. Dispersions according to anyone of Claims 1 to 12, containing from 60% to 90% by weight of component (a), from 5% to 30% by weight of component (b), from 0.5% to 1.5% by weight of component (c), from 0.5% to 4% by weight of component (d) and from 0.5% to 2.5% by weight of component (e), the sum of the components being 100%.

14. Use of the dispersions according to anyone of Claims 1 to 13 for treating glass fibres and textile fibres, optionally in the form of wovens or nonwovens.

15. Glass fibres and textile fibres, optionally in the form of wovens or nonwovens according to Claim 14.


**Patentansprüche**

1. Wäßrige Dispersionen acrylhaltiger Polymerisate, die bei Anwendung der Dispersionen kein Formaldehyd abgeben, wenigstens teilweise bestehend aus folgenden Komponenten:

(a) 25 bis 95 Gew.-% mindestens eines polymerisationsfähigen Acrylmonomers, dessen entsprechendes Homopolymerisat eine Glasübergangstemperatur (Tg) von weniger als 0°C und bevorzugt von weniger als -20°C aufweist,

(b) 4 bis 70 Gew.-% mindestens eines polymerisationsfähigen Acrylmonomers, dessen entsprechendes Homopolymerisat eine Glasübergangstemperatur (Tg) von mehr als 0°C und bevorzugt von mehr als 40°C aufweist,

(c) 0,05 bis 4 Gew.-% und bevorzugt 0,05 bis 2 Gew.-% mindestens eines mindestens zwei ethylenisch ungesättigte Bindungen enthaltenden Monomers,

(d) 0,2 bis 5 und bevorzugt 0,5-3 Gew.-% eines Vinylsilans der Formel:

$$CH_2=CR-Si(OR')_nR_m$$

in der bedeuten:

- n ist eine ganze Zahl gleich 2 oder 3,
- m ist eine ganze Zahl gleich 0 oder 1,
- R = H oder $CH_3$,
- R' = $C_1$-$C_{10}$- und bevorzugt $C_3$-$C_5$-Alkylgruppe, gegebenenfalls auch verzweigt,

(e) 0,2 bis 10 Gew.-% eines ethylenisch ungesättigten Monomers mit einer oder mehreren Säuregruppen, bevorzugt Carbonsäuregruppen, oder entsprechender Salze und/oder entsprechender Anhydride,

wobei die Summe der Komponenten (a) + (b) + (c) + (d) + (e) 100% beträgt, die wäßrigen Dispersionen durch eine radikalische Polymerisation erhältlich sind, die Polymerisation in Gegenwart von Initiatorensystemen oder von Redoxpaaren, bei denen das Reduktionsmittel kein Formaldehyd abgibt, durchgeführt wird, die Polymerisatdispersion am Ende der Polymerisation mit Redoxpaaren, bei denen das Reduktionsmittel kein Formaldehyd abgibt, behandelt wird, um den Restmonomerengehalt zu senken, die Komponenten (d) und gegebenenfalls (e) erst nach erfolgter Polymerisation der Komponenten (a) + (b) + (c) zugesetzt werden, der Zusatzzeitpunkt für die Monomeren (d) und (e) so gewählt wird, daß diese Monomere im wesentlichen in die Teilchenschale einpolymerisiert werden.

2. Dispersionen nach Anspruch 1, bei denen die Komponenten (d) und gegebenenfalls (e) erst dann zugesetzt werden, wenn die Polymerisation der Komponenten (a) + (b) + (c) etwa zur Hälfte der Gesamtmenge der Monomeren erfolgt ist, wobei (e) gegebenenfalls zusammen mit (a) + (b) + (c) in einer Menge von 0 bis 100 Gew.-% (e) vorliegt.

3. Dispersionen nach Anspruch 2, bei denen die Komponenten (d) und gegebenenfalls (e) erst dann zugesetzt werden, wenn die Polymerisation der Komponenten (a) + (b) + (c) etwa zu zwei Drittel der Gesamtmenge der Monomeren erfolgt ist.

4. Dispersionen nach einem der Ansprüche 1 bis 3, bei denen die Komponente (e) in der ersten Voremulsion zusammen mit (a) + (b) + (c) bevorzugt zumindest zur Hälfte der Gesamtmenge der Monomeren polymerisiert wird, wobei die Menge (e) zwischen 0 und 75 Gew.-% bezogen auf die Gesamtmenge an (e) beträgt, und anschließend eine zweite Voremulsion (a) + (b) + (d) + (e) zugesetzt wird, in der die Menge (e) zwischen 25 und 100 Gew.-% der Gesamtmenge (e) beträgt.

5. Dispersionen nach einem der Ansprüche 1 bis 4, bei denen es sich bei den in der Polymerisationsphase (Voremulsionszulauf) eingesetzten Initiatorensystemen um solche für die radikalische Polymerisation von Monomeren in wäßriger Emulsion und davon bevorzugt um organische Hydroperoxide in wäßriger Lösung oder Salzen davon und um Peroxydischwefelsäuresalze handelt.

6. Dispersionen nach einem der Ansprüche 1 bis 5, bei denen es sich bei den Reduktionsmitteln der Redoxpaare, die kein Formaldehyd abgeben, um Ammoniumoder Alkalimetallsulfite und Hydrogensulfite, Ascorbinsäure, einen monofunktionellen Aldehyd mit mindestens 4 Kohlenstoffatomen und mindestens einem die Salzbildung ermöglichendem Wasserstoff, der organisch oder anorganisch ist, oder Salzen davon, wobei das Reduktionsmittel Aldehyd oder dessen Salze eine Wasserlöslichkeit von mindestens 5 Gew.-% und bevorzugt von mindestens 10 Gew.-% aufweisen, eine Sulfinsäure der Formel:

$$MO-S(O)-C(R^1R^2R^3),$$

in der bedeuten:

- M ist Wasserstoff, Ammonium, ein einwertiges Metallion oder ein zweiwertiges Ion aus den Gruppen Ia, IIa, IIb, IVa und VIITb,
- $R^1$ is OH odr $NR^4R^5$ mit $R^4$ und $R^5$ unabhängig voneinander in der Bedeutung H oder $C_1$-$C_6$-Alkyl,

- R$^2$ ist H, Alkyl, Alkenyl, Cycloalkyl oder Aryl, wobei der aromatische Ring gegebenenfalls durch C$_1$-C$_6$-Alkyl, OH, C$_1$-C$_6$-Alkoxy, Halogen, CF$_3$ in der 1-, 2- oder 3-Position unabhängig voneinander substituiert ist,
- R$^3$ ist H, COOM, SO$_3$M, COR$^4$, CONR$^4$R$^5$ oder COOR$^4$, wobei M, R$^4$ und R$^5$ die obengenannte Bedeutung haben oder R$^2$ als Aryl der obigen Definition entspricht, handelt.

7. Dispersionen nach einem der Ansprüche 1 bis 6, bei denen als Komponente (a) Monomere des Typs (Meth)acryl mit 4 bis 20 Kohlenstoffatomen und bevorzugt 5 bis 15 Kohlenstoffatomen dienen.

8. Dispersionen nach einem der Ansprüche 1 bis 7, bei denen als Komponente (b) Monomere des Typs (Meth)acryl mit 3 bis 20 Kohlenstoffatomen und bevorzugt 3 bis 10 Kohlenstoffatomen dienen.

9. Dispersionen nach Anspruch 8, bei denen die Komponente (b) mit Styrol oder Derivaten davon in einer Menge von 5 bis 70 Gew.-% bezogen auf die Gesamtmenge von (b) gemischt ist.

10. Dispersionen nach einem der Ansprüche 1 bis 9, bei denen als Komponente (c) Monomere mit mindestens zwei ethylenisch ungesättigten Bindungen des Typs Acryl, Vinyl oder Allyl und bevorzugt Monomere mit mehr als zwei der genannten ethylenisch ungesättigten Bindungen dienen.

11. Dispersionen nach einem der Ansprüche 1 bis 10, bei denen die Komponente (d) unter Vinyltriisopropoxysilan und Vinyltrimethoxysilan ausgewählt ist.

12. Dispersionen nach einem der Ansprüche 1 bis 11, bei denen die Komponente (e) unter (Meth)acrylsäure, Itakonsäure, Acrylamidodimethylpropansulfonsäure, Styrolsulfonsäure, Maleinsäure und Fumarsäure oder den Anhydriden oder Salzen der genannten Säuren ausgewählt ist.

13. Dispersionen nach einem der Ansprüche 1 bis 12, enthaltend 60 bis 90 Gew.-% der Komponente (a), 5 bis 30 Gew.-% der Komponente (b), 0,5 bis 1,5 Gew.-% der Komponente (c), 0,5 bis 4 Gew.-% der Komponente (d) und 0,5 bis 2,5 Gew.-% der Komponente (e), wobei die Summe der Komponenten 100% beträgt.

14. Verwendung der Dispersionen gemäß einem der Ansprüche 1 bis 13 zur Behandlung von Glasfasern und Textilfasern, gegebenenfalls in Form von Geweben oder Vliesen.

15. Gegebenenfalls in Form von Geweben oder Vliesen vorliegende Glasfasern und Textilfasern gemäß Anspruch 14.

**Revendications**

1. Dispersions aqueuses de polymères acryliques qui ne libèrent pas de formaldéhyde durant l'application des dispersions, comprenant les constituants suivants :

   (a) de 25% à 95% en poids d'un ou de plusieurs monomères acryliques polymérisables dont l'homopolymère correspondant a une température de transition vitreuse (Tg) inférieure à 0°C et de préférence inférieure à -20°C ;
   (b) de 4% à 70% en poids d'un ou de plusieurs monomères acryliques polymérisables dont l'homopolymère correspondant a une Tg supérieure à 0°C et de préférence supérieure à 40°C ;
   (c) de 0,05% à 4% en poids, et de préférence de 0,05% à 2% en poids, d'un ou de plusieurs monomères contenant au moins deux insaturations éthyléniques ;
   (d) de 0,2% à 5%, et de préférence de 0,5 à 3%, en poids, d'un vinylsilane de formule :

$$CH_2=CR\text{-}Si(OR')_n R_m$$

   dans laquelle :

   n est un nombre entier égal à 2 ou à 3,
   m est un nombre entier égal à 0 ou à 1,
   R = H ou CH$_3$,
   R' = groupe alkyle en C$_1$-C$_{10}$ et de préférence en C$_3$-C$_5$, si possible linéaire ou ramifié ;

(e) de 0,2% à 10% en poids d'un monomère à insaturation éthylénique contenant un ou plusieurs groupes acides, de préférence des groupes acide carboxylique, ou des sels correspondants et/ou des anhydrides correspondants ;

la somme des constituants (a) + (b) + (c) + (d) + (e) étant de 100%, lesdites dispersions aqueuses pouvant être obtenues par le biais d'un procédé de polymérisation radicalaire, la polymérisation étant réalisée en présence de systèmes initiateurs ou de couples redox dans lesquels l'agent réducteur ne libère pas de formaldéhyde, la dispersion de polymère à la fin de la polymérisation étant soumise à un traitement pour réduire la teneur en monomères libres avec des couples redox dans lesquels l'agent réducteur ne libère pas de formaldéhyde, les constituants (d) et éventuellement (e) étant ajoutés après la polymérisation des constituants (a) + (b) + (c), le moment de l'addition des monomères (d) et (e) étant tel que ces monomères soient essentiellement situés dans la couche extérieure des particules.

2. Dispersions selon la revendication 1, dans lesquelles les constituants (d) et éventuellement (e) sont ajoutés après la polymérisation des constituants (a) + (b) + (c) jusqu'à environ la moitié en poids de la quantité totale des monomères, la quantité de (e), lorsqu'il est présent avec (a) + (b) + (c), s'échelonnant de 0% à 100% en poids de (e).

3. Dispersions selon la revendication 2, dans lesquelles les constituants (d) et éventuellement (e) sont ajoutés après la polymérisation des constituants (a) + (b) + (c) jusqu'à environ deux tiers en poids par rapport au poids total des monomères.

4. Dispersions selon l'une quelconque des revendications 1 à 3, dans lesquelles le constituant (e) est polymérisé dans la première pré-émulsion avec (a) + (b) + (c), de préférence jusqu'à au moins la moitié en poids par rapport à la quantité totale des monomères, la quantité de (e) étant comprise entre 0% et 75% en poids par rapport à la quantité totale de (e), opération suivie de l'addition d'une seconde pré-émulsion (a) + (b) + (d) + (e) dans laquelle la quantité de (e) est comprise entre 25% et 100% en poids par rapport à la quantité totale de (e).

5. Dispersions selon l'une quelconque des revendications 1 à 4, dans lesquelles les systèmes initiateurs utilisés dans la phase de polymérisation (charge de pré-émulsion) sont ceux destinés à la polymérisation radicalaire de monomères en émulsion aqueuse, de préférence des hydroperoxydes organiques en solution aqueuse ou leurs sels et des sels d'acide peroxydisulfurique.

6. Dispersions selon l'une quelconque des revendications 1 à 5, dans lesquelles les agents réducteurs des couples redox qui ne libèrent pas de formaldéhyde sont des sulfites et hydrogénosulfites d'ammonium ou de métaux alcalins ; de l'acide ascorbique ; un aldéhyde monofonctionnel ayant un nombre d'atomes de carbone supérieur ou égal à 4 et contenant au moins un atome d'hydrogène salifiable, qui est organique ou minéral, ou des sels de celui-ci, l'agent réducteur aldéhyde ou ses sels étant solubles dans l'eau jusqu'à au moins 5% en poids et de préférence jusqu'à au moins 10% en poids ; un acide sulfinique de formule :

$$MO\text{-}S(O)\text{-}C(R^1R^2R^3),$$

dans laquelle :

- M est un atome d'hydrogène, un ammonium, un ion métallique monovalent ou un ion divalent choisi parmi les groupes Ia, IIa, IIb, IVa et VIIIb ;
- $R^1$ est OH ou $NR^4R^5$, où $R^4$ et $R^5$, indépendamment l'un de l'autre, sont H ou un groupe alkyle en $C_1$-$C_6$ ;
- $R^2$ est H ou un groupe alkyle, alcényle, cycloalkyle ou aryle, où le noyau aromatique porte éventuellement des substituants en position 1, 2 ou 3, qui sont choisis, indépendamment les uns des autres, parmi les groupes alkyle en $C_1$-$C_6$, OH, alcoxy en $C_1$-$C_6$, halogéno, $CF_3$ ;
- $R^3$ est H, COOM, $SO_3M$, $COR^4$, $CONR^4R^5$ ou $COOR^4$, où M, $R^4$ et $R^5$ ont les significations données ci-dessus ou, lorsque $R^2$ est un groupe aryle, il est tel que défini ci-dessus.

7. Dispersions selon l'une quelconque des revendications 1 à 6, dans lesquelles des monomères de type (méth) acrylique contenant de 4 à 20 atomes de carbone et de préférence de 5 à 15 atomes de carbone sont utilisés comme constituant (a).

8. Dispersions selon l'une quelconque des revendications 1 à 7, dans lesquelles des monomères de type (méth)acrylique contenant de 3 à 20 atomes de carbone et de préférence de 3 à 10 atomes de carbone sont utilisés comme constituant (b).

9. Dispersions selon la revendication 8, dans lesquelles le constituant (b) est mélangé avec du styrène ou des dérivés du styrène en quantité de 5% à 70% en poids par rapport au poids total de (b).

10. Dispersions selon l'une quelconque des revendications 1 à 9, dans lesquelles des monomères contenant au moins deux insaturations éthyléniques de type acrylique, vinylique ou allylique, de préférence des monomères contenant plus de deux desdites insaturations, sont utilisés comme constituant (c).

11. Dispersions selon l'une quelconque des revendications 1 à 10, dans lesquelles le constituant (d) est choisi parmi le vinyltriisopropoxysilane et le vinyltriméthoxysilane.

12. Dispersions selon l'une quelconque des revendications 1 à 11, dans lesquelles le constituant (e) est choisi parmi l'acide (méth)acrylique, l'acide itaconique, l'acide acrylamidodiméthylpropanesulfonique, l'acide styrène sulfonique, l'acide maléique et l'acide fumarique, ou les anhydrides ou sels desdits acides.

13. Dispersions selon l'une quelconque des revendications 1 à 12, contenant de 60% à 90% en poids de constituant (a), de 5% à 30% en poids de constituant (b), de 0,5% à 1,5% en poids de constituant (c), de 0,5% à 4% en poids de constituant (d) et de 0,5% à 2,5% en poids de constituant (e), la somme des constituants étant de 100%.

14. Utilisation des dispersions selon l'une quelconque des revendications 1 à 13 pour traiter des fibres de verre et des fibres textiles, éventuellement sous forme de tissus tissés ou non tissés.

15. Fibres de verre et fibres textiles, éventuellement sous forme de tissus tissés ou non tissés selon la revendication 14.